## Europäisches Patentamt

## European Patent Office

## Office européen des brevets

(19)

(11) Veröffentlichungsnummer: **0 257 240**
**B1**

(12) **EUROPÄISCHE PATENTSCHRIFT**

(45) Veröffentlichungstag der Patentschrift:
03.10.90

(51) Int. Cl.⁵: **B29B 7/76**

(21) Anmeldenummer: **87109375.3**

(22) Anmeldetag: **30.06.87**

(54) Mischkopf zum Herstellen eines chemisch reagierenden Gemisches.

(30) Priorität: **27.08.86 DE 3629021**

(43) Veröffentlichungstag der Anmeldung:
**02.03.88 Patentblatt 88/9**

(45) Bekanntmachung des Hinweises auf die Patenterteilung:
**03.10.90 Patentblatt 90/40**

(84) Benannte Vertragsstaaten:
**AT BE CH ES FR GB GR IT LI LU NL SE**

(56) Entgegenhaltungen:
**DE-A- 3 418 522**
**FR-A- 2 345 285**
**FR-A- 2 545 000**
**US-A- 3 799 403**

(73) Patentinhaber: **Klöckner Ferromatik Desma GmbH,**
**Riegeler Strasse 4, D-7831 Malterdingen(DE)**

(72) Erfinder: **Pontius, Klaus, Dipl.-Ing., Schulstrasse 88,**
**D-5508 Hermeskeil(DE)**
Erfinder: **Settinger, Manfred, Dipl.-Ing.,**
**Weinbergstrasse 23, D-5511 Ockten(DE)**

(74) Vertreter: **Kiefer, Winfried, Dipl.-Phys., Klöckner-Werke**
**Aktiengesellschaft Patentabteilung Klöcknerstrasse 29,**
**D-4100 Duisburg 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft einen Mischkopf zum Herstellen eines chemisch reagierenden Gemisches aus mindestens zwei Komponenten, insbesondere eines zu Polyurethan ausreagierenden Gemisches aus Isocyanat und Polyol, der eine Bohrung mit einem axial verschiebbaren Stößel und in der Wandung der Bohrung zur Bildung einer Mischkammer zwei Düsen zum Zuführen der Komponenten aufweist, wobei der Stößel das hergestellte Gemisch aus der Bohrung fördert, wobei der Mischkopf eine weitere Bohrung aufweist, die Achse der Bohrung und die Achse der weiteren Bohrung sich schneiden, in der weiteren Bohrung ein Körper angeordnet ist und der Körper den auf dem Stößel gebildeten Gemischfilm während der axialen Bewegung des Stößels nach dem Reinigen der Mischkammer im wesentlichen abstreift.

Mischköpfe zum Herstellen von Formkörpern aus Polyurethan sind bereits bekannt (DBP 20 65 841).

Diese Mischköpfe weisen eine Bohrung mit einer offenen Stirnseite auf, die die Austrittsöffnung für das Gemisch bildet, an die sich der Hohlraum einer Form zum Herstellen der Formkörper aus Polyurethan anschließt.

In etwa im mittleren Bereich der Bohrung sind in ihrer Wandung einander gegenüber zwei Düsen angeordnet, über die Isocyanat und Polyol in die Bohrung injiziert werden und zur Vermischung aufeinander prallen. Dieser Bereich der Bohrung wird allgemein als Mischkammer bezeichnet.

Da der Stößel im Idealfall das Gemisch vollständig aus der Bohrung fördert, wird er auch als Reinigungsstößel bezeichnet.

Er befindet sich während des Mischens der Komponenten in einer Stellung oberhalb der beiden Düsen.

Um ein homogenes Mischen der Komponenten in der Mischkammer zu erreichen, muß in der Mischkammer ein vorgegebener Druck, der sogenannte Mischungsvordruck herrschen.

Zur Erzeugung dieses Mischungsvordrucks sind Mischköpfe der eingangs erwähnten Art bekannt (FR-A-2 345 385). Der in der weiteren Bohrung axial verschiebbare Körper hat die Funktion eines Ventilkörpers, der während des Mischens der Komponenten sich in einer Zwischenstellung zwischen den Stellungen "Bohrung geschlossen" und "Bohrung freigegeben" befindet, so daß unterhalb der Mischkammer ein Strömungswiderstand gebildet ist. Nach dem Mischen wird der Körper in die Stellung "Bohrung freigegeben" gebracht, so daß der Reinigungsstößel die Bohrung des Körpers durchfahren kann.

Da ausreagiertes Polyurethan sehr hohe Klebekräfte aufweist, führt der auf dem Reinigungsstößel gebildete Film aus ausreagiertem Polyurethan dazu, daß sehr hohe Bewegungskräfte erforderlich sind, um ihn axial zu verschieben. Der Reinigungsstößel bzw. Stößel ist somit ein hochbeanspruchtes Teil, das oftmals zu Bruch geht.

Der Erfindung liegt die Aufgabe zugrunde, einen Mischkopf der eingangs erwähnten Art derart auszubilden, daß diese an dem Reinigungsstößel auftretenden Klebekräfte im wesentlichen vermieden werden.

Diese Aufgabe wird erfindungsgemäß dadurch gelöst, daß der Körper ein Keramikkörper ist.

Durch diese Maßnahme wird erreicht, daß der auf dem Stößel gebildete Gemischfilm aus ausreagiertem Polyurethan abgestreift wird. Erfindungsgemäß ist hierbei, daß ein Keramikkörper zum Einsatz kommt. Es zeigte sich nämlich überraschenderweise, daß ausreagiertes Polyurethan auf Keramikflächen leicht mechanisch entfernt werden kann, so daß ein festes Verkleben des Keramikkörpers mit dem Reinigungsstößel über den Gemischfilm unterbunden wird. Als Keramikmaterial kommt z.B. Titanoxid zum Einsatz. Es kann ein schmaler Ring aus ausreagiertem Gemisch auf dem Reinigungsstößel verbleiben, ohne die erfindungsgemäße leichte Verschiebbarkeit wesentlich zu beeinflussen. Dieser Ring hat die Funktion eines Dichtungsringes, der die Mischkammer oberhalb der Düsen gegen den Mischkopf abdichtet.

In einer weiteren Ausgestaltung der Erfindung begrenzen zum Wegführen der abgestreiften Gemischreste der Keramikkörper und die weitere Bohrung einen von einem Spülmittel durchflossenen Spalt, so daß die abgestreiften ausreagierten Gemischreste (Polyurethanreste) bzw. Filmreste unmittelbar abgeführt werden, wie dies in der spanabhebenden Bearbeitung bekannt ist.

In einer noch weiteren Ausgestaltung der Erfindung weist der Keramikkörper mindestens eine Abflachung zur Ausbildung des Spaltes auf, durch den das Spülmittel fließt und die Gemischbzw. Filmreste wegtransportiert.

In einer weiteren Ausgestaltung der Erfindung weist der Keramikkörper eine zum Stößel komplementäre und ihn umfassende Bohrung auf, wobei die Toleranzen so bemessen sind, daß eine gleitende Führung des Stößels und ein Abtragen des gebildeten Films in dem von dem Keramikkörper überstrichenen Bereich des Stößels gewährleistet ist.

Gemäß einem Ausführungsprinzip besteht der Keramikkörper aus zwei Abstreifern, wobei die beiden Abstreifer in ihrer gegen den Stößel anstehenden Stellung die komplementäre Bohrung begrenzen. Durch diese Maßnahmen ist eine einfache konstruktive Ausbildung des den Film abstreifenden Keramikkörpers geschaffen.

In einer noch weiteren Ausgestaltung der Erfindung stehen die beiden Abstreifer des Keramikkörpers mit ihrer vom Stößel abgewandten Stirnseite jeweils gegen eine Druckfeder an, deren Vorspannung stufenlos einstellbar ist.

In einer noch weiteren Ausgestaltung der Erfindung sind die Abstreifer pneumatisch bzw. hydraulisch beaufschlagbar, und zwar in der Weise, daß während des Reinigens der Mischkammer die Abstreifer nur unter einem leichten Druck gegen den Reinigungsstößel anstehen, der abschließend zum Abtragen des Films erhöht wird.

Die Erfindung ist in der Zeichnung anhand von Ausführungsbeispielen erläutert.

Es zeigen:

Fig. 1 einen Schnitt durch einen Mischkopf zum Herstellen von Formkörpern aus Polyurethan,

Fig. 2 einen Schnitt gemäß II-II in Fig. 1,

Fig. 3 den Keramikkörper in perspektivischer Darstellung,

Fig. 4 in der Darstellung der Fig. 1 ein weiteres Ausführungsbeispiel.

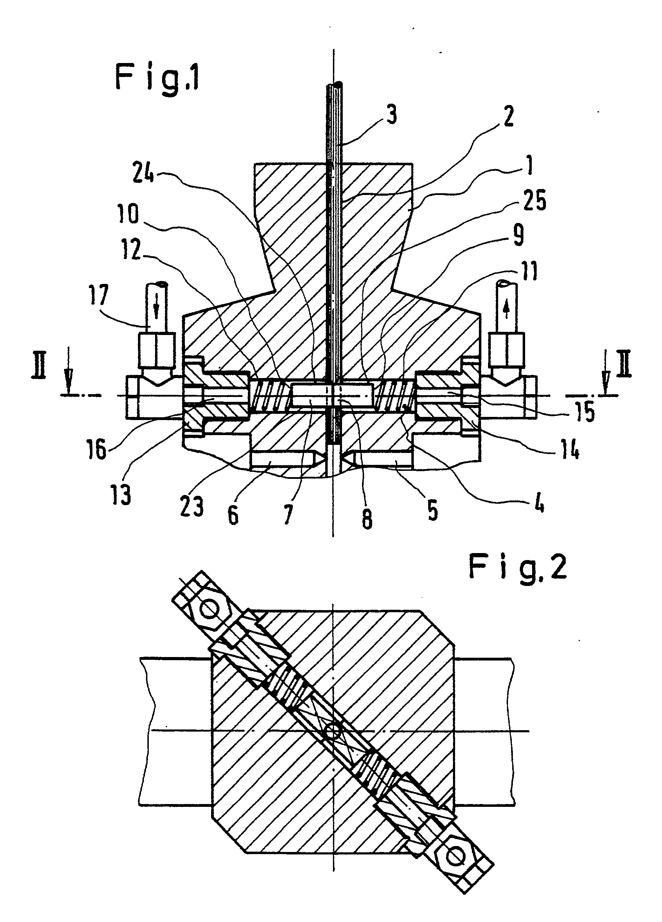

In Fig. 1 ist mit 1 das Gehäuse des Mischkopfes bezeichnet, das eine Bohrung 2 aufweist, die den Reinigungsstößel 3 führt.

Der Mischkopf weist eine weitere Bohrung 4 auf, deren Achse die Achse der Bohrung 2 senkrecht schneidet.

Unterhalb dieser weiteren Bohrung sind in der Wandung der Bohrung zwei Düsen 5 und 6 einander gegenüberstehend angeordnet, die der Zufuhr von Isocyanat und Polyol in die Mischkammer dienen, die mit dem Abschnitt der Bohrung 2 im Bereich dieser beiden Düsen identisch ist.

In einer weiteren Bohrung 4 ist axial verschiebbar ein Keramikkörper 7 angeordnet, der eine durchgehende Bohrung 8 aufweist, die senkrecht zur Achse des Keramikkörpers verläuft und mit dem Reinigungsstößel 3 fluchtet.

Die Stirnseiten 9 und 10 des Keramikkörpers 5 stehen gegen Druckfedern 11 und 12 an, die in der weiteren Bohrung angeordnet sind,

Diese weitere Bohrung weist an ihren Enden jeweils einen Gewindestopfen 13 bzw. 14 auf, die eine Durchgangsbohrung 15 bzw. 16 aufweisen. An den Gewindestopfen 13 ist eine Spülmittelleitung 17 angeschlossen. Die Durchgangsbohrung 16 dient als Abfluß. Die Druckfedern stützen sich an dem Gewindestopfen ab.

Fig. 2 zeigt einen Schnitt gemäß II-II. Gleiche Teile sind mit gleichen Bezugszeichen bezeichnet.

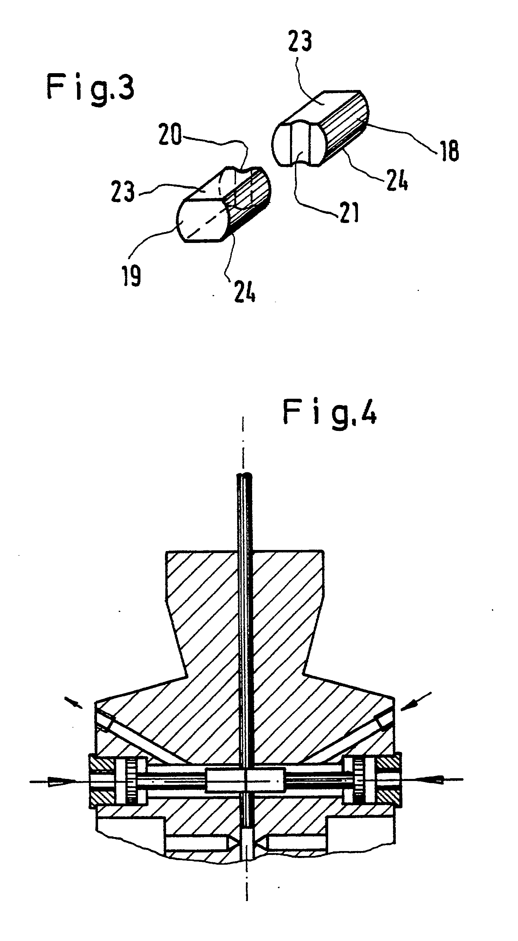

Gemäß Fig. 3 besteht der Keramikkörper 7 aus den beiden Abstreifern 18 und 19, die jeweils eine Halbbohrung 20 bzw. 21 aufweisen. In der Stellung der Fig. 1 bilden diese beiden Halbbohrungen die weitere Bohrung.

Der Keramikkörper bzw. die Abstreifer weisen Abflachungen 23 bzw. 24 auf, so daß in der weiteren Bohrung ein Spalt 25 zum Wegführen der Filmreste gebildet ist.

Während des Mischens von Isocyanat und Polyol befindet sich der Stößel in der in Fig. 1 dargestellten oberen Stellung. Sobald das Mischen beendet ist, bewegt sich der Reinigungsstößel in axialer Richtung zum unteren Rand der Zeichnungsebene und führt das zu Polyurethan auszureagierende Gemisch aus der Mischkammer, z.B. aus der Bohrung in den Hohlraum der nicht dargestellten Form, in der der Formkörper aus Polyurethan gebildet wird. Während der Abwärtsbewegung bildet sich auf dem Reinigungsstößel ein Film aus ausreagierndem Gemisch. Beim Hochfahren des Reinigungsstößels in die in Fig. 1 dargestellte obere Postion wird der auf ihm befindliche Film von dem Keramikkörper in dem überstrichenen Bereich abgestreift. Da Spülmittel die weitere Bohrung durchfließt, werden die am Reinigungsstößel abgestreiften Filmreste aus der weiteren Bohrung wegtransportiert.

Unterhalb des Keramikkörpers verbleibt ein ringförmiger Filmrest, der die Funktion einer Dichtung hat und die Mischkammer nach oben hin (vgl. Fig. 1) abdichtet, Da sich der Reinigungsstößel in seiner unteren Stellung mit seinem Endabschnitt unterhalb des Keramikkörpers befindet, verbleibt auf dem Keramikkörper ein Ring aus ausreagiertem Material, der die Funktion einer Dichtung hat und die Mischkammer nach oben hin (vgl. Fig. 1) abdichtet.

Der Reinigungsstößel kann prinzipiell auch so bemessen sein, daß der gesamte gebildete Film entfernt wird, wodurch jedoch das Abdichten entfällt.

Durch die erfindungsgemäße Maßnahme wird vor allem erreicht, daß einerseits zum axialen Verschieben des Reinigungsstößels die bisher erforderlichen hohen Drücke vermieden werden. Es zeigte sich, daß es ausreicht, den Reinigungsstößel pneumatisch in axialer Richtung zu verschieben.

Es ist weiterhin nicht mehr erforderlich, den Reinigungsstößel entsprechend diesen bisher hohen Belastungen auszulegen, d.h. sein Durchmesser kann erheblich geringer gewählt werden als bisher.

## Patentansprüche

1. Mischkopf zum Herstellen eines chemisch reagierenden Gemisches aus mindestens zwei Komponenten, insbesondere eines zu Polyurethan ausreagierenden Gemisches aus Isocyanat und Polyol, der eine Bohrung (2) mit einem axial verschiebbaren Stößel (3) und in der Wandung der Bohrung zur Bildung einer Mischkammer zwei Düsen (5, 6) zum Zuführen der Komponenten aufweist, wobei der Stößel das hergestellte Gemisch aus der Bohrung fördert, wobei der Mischkopf eine weitere Bohrung (4) aufweist, die Achse der Bohrung (2) und die Achse der weiteren Bohrung (4) sich schneiden, in der weiteren Bohrung (4) ein Körper (7) angeordnet ist und der Körper den auf dem Stößel (3) gebildeten Gemischfilm während der axialen Bewegung des Stößels nach dem Reinigen der Mischkammer im wesentlichen abstreift, dadurch gekennzeichnet, daß der Körper ein Keramikkörper ist.

2. Mischkopf nach Anspruch 1, dadurch gekennzeichnet, daß zum Wegführen der abgestreiften Gemischreste der Keramikkörper und die weitere Bohrung einen von einem Spülmittel durchflossenen Spalt (25) begrenzen.

3. Mischkopf nach Anspruch 2, dadurch gekennzeichnet, daß zur Ausbildung des Spaltes des Keramikkörpers mindestens eine Abflachung (23, 24) aufweist.

4. Mischkopf nach Anspruch 1, 2 oder 3, dadurch gekennzeichnet, daß der Keramikkörper eine zum Stößel komplementäre und ihn umfassende Bohrung (8) aufweist.

5. Mischkopf nach einem der Ansprüche 1 - 4, dadurch gekennzeichnet, daß der Keramikkörper aus zwei Abstreifern (18, 19) besteht, und die beiden Abstreifer in ihrer gegen den Stößel anstehenden Stellung die komplementäre Bohrung begrenzen.

6. Mischkopf nach einem der Ansprüche 1 - 5, dadurch gekennzeichnet, daß die beiden Abstreifer des Keramikkörpers mit ihrer vom Stößel abgewandten Stirnseite jeweils gegen eine Druckfeder (11 bzw. 12) anstehen.

7. Mischkopf nach Anspruch 5 oder 6, dadurch gekennzeichnet, daß die Abstreifer pneumatisch oder hydraulisch beaufschlagbar sind.

## Claims

1. Mixing head for producing a chemically reactive mixture from at least two components, in particular a mixture of isocyanate and polyol reacting to form polyurethane, which comprises a bore (2) with an axially displaceable plunger (3) and in the wall of the bore for the formation of a mixing chamber, two nozzles (5, 6) for supplying the components, the plunger conveying the mixture produced from the bore, the mixing head comprising an additional bore (4), the axis of the bore (2) and the axis of the additional bore (4) intersecting, a member (7) being located in the additional bore (4) and the member substantially wiping off the film of mixture formed on the plunger (3) during the axial movement of the plunger, after cleaning of the mixing chamber, characterised in that the member is a ceramic member.

2. Mixing head according to Claim 1, characterised in that for removing the residues of mixture wiped off, the ceramic member and the additional bore define a gap (25) through which a rinsing medium flows.

3. Mixing head according to Claim 2, characterised in that in order to form the gap, the ceramic member comprises at least one flat portion (23, 24).

4. Mixing head according to Claim 1, 2 or 3, characterised in that the ceramic member comprises a bore (8) complementing the plunger and encompassing it.

5. Mixing head according to one of Claims 1 to 4, characterised in that the ceramic member consists of two wipers (18, 19) and in their position bearing against the plunger, the two wipers define the complementary bore.

6. Mixing head according to one of Claims 1 to 5, characterised in that the two wipers of the ceramic member bear respectively against a compression spring (11, 12) by their end face remote from the plunger.

7. Mixing head according to Claim 5 or 6, characterised in that the wipers can be operated pneumatically or hydraulically.

## Revendications

1. Tête mélangeuse pour la préparation réagissant chimiquement, constitué d'au moins deux composants, en particulier un mélange d'isocyanate et de polyol, réagissant pour donner un polyuréthane, qui présente une cavité (2) avec un poussoir (3) coulissant axialement et, dans la paroi de la cavité pour former une chambre de mélange, deux buses (5, 6) pour amener les composants, le poussoir déplaçant hors de la cavité le mélange préparé, la tête mélangeuse présentant une autre cavité (4), l'axe de la cavité (2) et l'axe de l'autre cavité (4) se coupent, dans l'autre cavité (4) il est disposé un corps (7) et le corps détache essentiellement par raclage la pellicule de mélange formée sur le poussoir (3), pendant le déplacement axial du poussoir, après le nettoyage de la chambre de mélange, caractérisée en ce que le corps est un corps céramique.

2. Tête mélangeuse selon la revendication 1, caractérisée en ce que pour éliminer le reste de mélange détaché par raclage, le corps céramique et l'autre cavité délimitent une fente (25) dans laquelle circule un agent de rinçage.

3. Tête mélangeuse selon la revendication 2, caractérisée en ce que pour former la fente, le corps céramique présente au moins un méplat (23, 24).

4. Tête mélangeuse selon la revendication 1, 2 ou 3, caractérisé en ce que le corps céramique présente une cavité (8), de forme complémentaire à celle du poussoir, et renfermant celui-ci.

5. Tête mélangeuse selon l'une des revendications 1–4, caractérisée en ce que le corps céramique est constitué de deux racloirs (18, 19) et que les deux racloirs, dans leur position affleurant le poussoir, délimitent la cavité complémentaire.

6. Tête mélangeuse selon l'une des revendications 1–5, caractérisée en ce que les deux racloirs du corps céramique s'appuient, avec leur face frontale opposée au poussoir, chacun contre un ressort de compression (11 et 12).

7. Tête mélangeuse selon la revendication 5 ou 6, caractérisée en ce que les racloirs sont commandés par voie pneumatique ou hydraulique.

EP 0 257 240 B1

Fig.1

Fig.2

**Fig.3**

**Fig.4**